# EUROPÄISCHE PATENTSCHRIFT

(11) **EP 2 140 161 B1**
(45) Veröffentlichungstag und Bekanntmachung des Hinweises auf die Patenterteilung: **20.03.2013**
(21) Anmeldenummer: 08784614.3
(22) Anmeldetag: 04.07.2008
(51) Int. Cl.: F16D 33/06

(54) **HYDRODYNAMISCHE KUPPLUNG**
HYDRODYNAMIC CLUTCH
EMBRAYAGE HYDRODYNAMIQUE

(30) Priorität: 11.07.2007 DE 102007032212
(43) Veröffentlichungstag der Anmeldung: 06.01.2010
(73) Patentinhaber: Voith Patent GmbH, 89522 Heidenheim (DE)
(72) Erfinder: HOFFELD, Harald, 74564 Crailsheim (DE)
(74) Vertreter: Dr. Weitzel & Partner
(86) Internationale Anmeldenummer: PCT/EP2008/005470
(87) Internationale Veröffentlichungsnummer: WO 2009/007062

(56) Entgegenhaltungen:
- FR-A- 2 276 516
- GB-A- 1 272 517
- US-A- 3 107 492
- US-A- 3 145 535

## Beschreibung

Die vorliegende Erfindung betrifft eine hydrodynamische Kupplung mit konstanter oder variabler Füllung gemäß des Oberbegriffs von Anspruch 1.

Der Fachmann unterscheidet zwischen hydrodynamischen Kupplungen mit konstanter Füllung und füll- und entleerbaren Kupplungen. Während bei den zuletzt genannten das Arbeitsmedium je nach gewünschtem Füllzustand aus einem externen Kreislauf in den Arbeitsraum der Kupplung zu- oder abgeführt wird, verbleibt bei den erstgenannten das Arbeitsmedium stets innerhalb der Kupplung. Dies bedingt zwei konstruktive Schwierigkeiten: Erstens muss innerhalb der Kupplung ein Stauraum vorgesehen werden, welcher das Arbeitsmedium aufnimmt, das aufgrund des gewünschten Betriebszustands nicht im Arbeitsraum verweilen soll. Zudem kann das durch Fluidreibung erwärmte Arbeitsmedium nicht in einem externen Wärmetauscher gekühlt werden, wie er normalerweise im externen Arbeitsmediumkreislauf der füll- und entleerbaren Kupplungen angeordnet ist. Der gesagte Stauraum benötigt Bauraum innerhalb der Kupplung und es sind Maßnahmen gefordert, um die Wärme aus dem Inneren der Kupplung abzuleiten.

An hydrodynamische Kupplungen mit konstanter Füllung werden größere Anforderungen hinsichtlich ihrer Leistung gestellt. Das heißt, mit ihnen soll eine möglichst große Antriebsleistung von einer Antriebsmaschine auf eine Arbeitsmaschine ohne Verschleiß übertragen werden. Gleichzeitig ist in vielen Einsatzgebieten der für die hydrodynamische Kupplung zur Verfügung stehende Bauraum begrenzt. Herkömmliche Kupplungen können diese Anforderungen noch nicht ausreichend befriedigen.

Aus dem nächstliegenden Stand der Technik in Form der US 3,107,492 A ist eine gattungsgemäße hydrodynamische Kupplung mit einer konstanten oder variablen Füllung von Arbeitsmedium bekannt. Diese weist einen Arbeitsraum und einen Stauraum auf. Der Stauraum liegt in axialer Richtung neben dem Arbeitsraum. Zur Beeinflussung des übertragenen Drehmoments kann Arbeitsmedium vom Stauraum in den Arbeitsraum oder vom Arbeitsraum in den Stauraum geleitet werden.

Der Erfindung liegt daher die Aufgabe zugrunde, eine hydrodynamische Kupplung mit konstanter oder variabler Füllung darzustellen, welche gegenüber bekannten Kupplungen bei nicht vergrößertem Bauvolumen die Möglichkeit bietet, eine größere Antriebsleistung zu übertragen.

Diese Aufgabe wird durch eine hydrodynamische Kupplung mit den Merkmalen des Anspruchs 1 gelöst. Die abhängigen Ansprüche beschreiben besonders vorteilhafte Weiterbildungen der Erfindung.

Die erfindungsgemäße hydrodynamische Kupplung weist einen torusförmigen Arbeitsraum auf, welcher durch ein Pumpenrad und ein Turbinenrad, welche sich gegenüberstehen, ausgebildet wird. Innerhalb der Kupplung ist ein Stauraum vorgesehen, der mit dem Arbeitsraum in leitender Verbindung steht, so dass Arbeitsmedium aus dem Stauraum in den Arbeitsraum beziehungsweise aus dem Arbeitsraum in den Stauraum geleitet werden kann.

Die hydrodynamische Kupplung weist ein Einbauvolumen auf, welches durch ihre räumliche Ausdehnung bestimmt wird. Das Einbauvolumen im Sinne der vorliegenden Erfindung wird dabei durch ein Zylindervolumen mit einem konstanten äußeren Durchmesser definiert, wobei der äußere Durchmesser des Zylindervolumens dem maximalen äußeren Durchmesser DA der hydrodynamischen Kupplung entspricht, und die axiale Länge des Zylindervolumens gleich der maximalen axialen Erstreckung Sax der hydrodynamischen Kupplung ist. Erfindungsgemäß beträgt das Verhältnis des Volumens des Arbeitsraums der hydrodynamischen Kupplung zum Einbauvolumen im Bereich von 0,26 bis 0,5, insbesondere im Bereich von 0,26 bis 0,40 oder 0,30.

Unter Stauraum im Sinne der vorliegenden Erfindung ist dabei der Raum innerhalb der hydrodynamischen Kupplung zu verstehen, welcher jenes Arbeitsmedium innerhalb der hydrodynamischen Kupplung aufnimmt, welches sich nicht in dem Arbeitsraum befindet. Der Arbeitsraum wird dabei genau durch das Volumen definiert, welches die Räume in Umfangsrichtung gesehen zwischen den einzelnen Schaufeln des Pumpenrads und des Turbinenrads zusammen ausbilden, ergänzt um das ringförmige Volumen in Axialrichtung gesehen zwischen den Schaufeln des Pumpenrads und des Turbinenrads. Der Stauraum ist somit schaufelfrei und ist innerhalb der hydrodynamischen Kupplung vollständig radial innerhalb des Arbeitsraums angeordnet. Gemäß einer Ausführung, wie sie später mit Bezug auf die Figur beschrieben wird, mündet der Stauraum, welcher vollständig radial innerhalb des Arbeitsraums angeordnet ist, unmittelbar am radial inneren Umfang des Arbeitsraums, beispielsweise in dem axialen Abschnitt des Turbinenrads.

Besonders vorteilhaft ist es zudem, wenn das Verhältnis des Volumens des Stauraums zum Volumen des Arbeitsraums der hydrodynamischen Kupplung wenigstens gleich 0,185 ist, insbesondere größer als 0,185 ist. Vorteilhaft kann dieses Verhältnis im Bereich von 0,185 bis 2,5, besonders vorteilhaft im Bereich von 0,185 bis 0,190 liegen.

Um dieses im Vergleich zu herkömmlichen Kupplungen deutlich größere Arbeitsraumvolumen relativ zum Gesamtvolumen der hydrodynamischen Kupplung zu erreichen, ist es besonders vorteilhaft, das Verhältnis des Profildurchmessers zum Außendurchmesser der Kupplung größer oder gleich 0,89 auszuführen.

Unter dem Profildurchmesser DP versteht der Fachmann den Außendurchmesser des Schaufelprofiles, wobei in der Regel dieser Durchmesser bei Pumpenrad und Turbinenrad derselbe ist.

Ein solches Verhältnis von Profildurchmesser zum Außendurchmesser kann zum Beispiel dadurch erreicht werden, dass der Außendurchmesser der hydrodynamischen Kupplung 556 mm beträgt, und der Profildurchmesser 500 mm.

Zusätzlich zu dem Arbeitsraum und dem Aufnahmeraum können in der hydrodynamischen Kupplung, oder auch außerhalb derselben, weitere Räume oder Kammern vorgesehen sein. Beispielsweise können eine oder mehrere Verzögerungskammern mit einer vorgegebenen Größe insbesondere radial innerhalb des Arbeitsraums vorgesehen sein. Auch ist es möglich, teilweise oder vollständig radial außerhalb des Arbeitsraums eine weitere Verzögerungskammer oder allgemein einen Ringraum zur Aufnahme von Arbeitsmedium zusätzlich vorzusehen. Beispielsweise wird auf die Europäische Patentanmeldung 0 206 122 A1 verwiesen, deren beschriebenen Räume innerhalb der hydrodynamischen Kupplung, welche zusätzlich zu dem Stauraum und dem Arbeitsraum vorgesehen sind, im Rahmen der vorliegenden Erfindung vorgesehen werden können.

Gemäß einer besonderen Ausführung der Erfindung weist jedoch die hydrodynamische Kupplung ausschließlich einen Arbeitsraum, einen Ausgleichsraum und insbesondere, aber nicht notwendigerweise, einen verbleibenden durch Arbeitsmedium befüllbaren Raum zwischen der Schale der hydrodynamischen Kupplung und der Rückseite des von ihr umschlossenen Schaufelrads auf, welches mit einer Relativdrehzahl gegenüber der Schale umläuft.

Die vorliegende Erfindung kann sowohl bei hydrodynamischen Kupplungen mit Innenradantrieb als auch bei hydrodynamischen Kupplungen mit Außenradantrieb angewendet werden. Bei hydrodynamischen Kupplungen mit Innenradantrieb wird jenes Schaufelrad insbesondere über eine Antriebswelle angetrieben, welches von der Kupplungsschale zusammen mit dem dann abtriebsseitig angeordneten Schaufelrad umschlossen wird. Bei hydrodynamischen Kupplungen mit Außenradantrieb ist der Leistungsfluss genau entgegengesetzt. So wird das Außenrad, an welchem in der Regel die Schale angeschlossen ist, von einer Antriebsmaschine angetrieben, und das von dem Außenrad und der Schale umschlossene Innenrad ist abtriebsseitig angeordnet.

Das beschriebene große Verhältnis von Arbeitsraumvolumen gegenüber dem Gesamtvolumen wird vorteilhaft zudem dadurch erreicht, dass der Profilinnendurchmesser DI zum Profildurchmesser DP kleiner als 0,5, insbesondere kleiner oder gleich 0,485 ist. Dies bedeutet, dass die Profilhöhe (DP - DI)/2 verhältnismäßig groß ist, wodurch eine Schlupfreduzierung durch eine Volumenzunahme erreicht wird. Zudem kann eine weitere Schlupfreduzierung dadurch erreicht werden, dass auch die Profiltiefe T/DP im Vergleich zu herkömmlichen Kupplungen vergrößert wird. Insbesondere ist das Verhältnis der Profiltiefe T zum Profildurchmesser DP größer als 0,16, besonders vorteilhaft größer oder gleich 0,165.

Der Erfinder hat zudem erkannt, dass es in einer Weiterbildung der Erfindung vorteilhaft ist, wenn die Anzahl der Schaufeln gegenüber bekannten hydrodynamischen Kupplungen mit konstanter Füllung und vergleichbarem Gesamtvolumen reduziert wird. Das Optimum der Beschaufelung liegt nämlich für geringeren Nennschlupf bei einer niedrigeren Schaufelzahl. Dieser niedrigere Nennschlupf wird durch die beschriebene Schlupfreduzierung durch optimale Bauraumausnutzung erreicht. Besonders vorteilhaft weisen Pumpenrad und Turbinenrad nicht dieselbe Schaufelzahl auf. Insbesondere weist das Pumpenrad eine Schaufel mehr als das Turbinenrad auf.

Durch die erfindungsgemäße Ausbildung einer hydrodynamischen Kupplung mit konstanter Füllung kann, insbesondere durch Vergrößerung des Arbeitsraumes und des Stauraumes bei gleichbleibenden äußeren Abmaßen der Kupplung, eine deutlich vergrößerte Leistungsübertragungsfähigkeit der hydrodynamischen Kupplung erreicht werden.

Nachfolgend soll eine besonders vorteilhafte konstruktive Ausführung der erfindungsgemäßen hydrodynamischen Kupplung im Detail beschrieben werden.

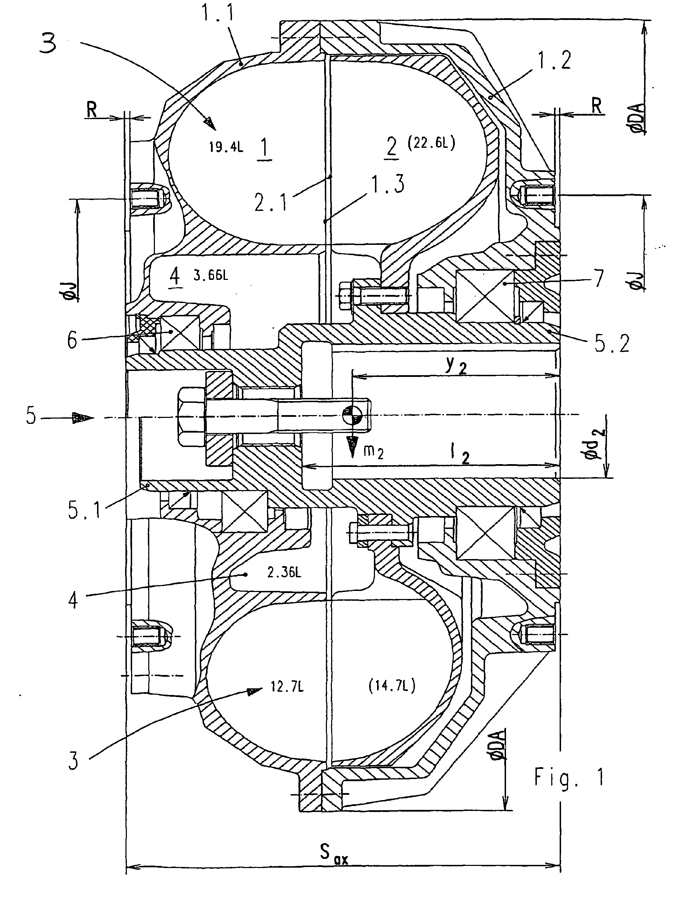

Figur 1 zeigt eine solche Ausführung in einem axialen Querschnitt, wobei in der unteren Hälfte eine herkömmliche hydrodynamische Kupplung mit konstanter Füllung dargestellt ist und in der oberen Hälfte eine erfindungsgemäße hydrodynamische Kupplung.

Wie man sofort erkennt, entsprechen die Einbaumaße der erfindungsgemäß verbesserten hydrodynamischen Kupplung den Einbaumaßen der herkömmlichen hydrodynamischen Kupplung.

Man erkennt ein Pumpenrad 1 und ein Turbinenrad 2, die zusammen einen Arbeitsraum 3 ausbilden. Zudem erkennt man einen Stauraum 4, welcher als Sammelraum für nicht im Arbeitsraum benötigtes Arbeitsmedium dient. Der Stauraum erstreckt sich entlang der Axialrichtung der hydrodynamischen Kupplung vollständig radial innerhalb des Arbeitsraums 3. Im einzelnen erstreckt sich in der Axialrichtung gesehen der Stauraum 4 von der Mitte des Turbinenrads 2 bis über den Bereich des im Pumpenrad 1 angeordneten Arbeitsraums 3 hinaus, bis zu einem vorgegebenen Abstand gegenüber dem axialen Ende der hydrodynamischen Kupplung, welcher beispielsweise 10 mm, allgemein zwischen 5 und 20 mm, besonders vorteilhaft zwischen 8 und 12 mm beträgt.

Das Pumpenrad 1 umschließt zusammen mit der Schale 1.2 das Turbinenrad 2.

Dabei bilden das Pumpenrad 1 und die Schale 1.2 zusammen einen Antriebsläufer 1.1 aus. Wie dargestellt ist, kann das Pumpenrad 1 beispielsweise mit der Schale 1.2 derart verschraubt sein, dass sie einen durchgehenden Hohlraum umschließen, in welchem einerseits das Turbinenrad 2 angeordnet ist, und welcher andererseits den Stauraum 4 beinhaltet.

Das Pumpenrad 1 trägt eine Vielzahl von Schaufelprofilen, auch Beschaufelung 1.3 genannt. Die maximale axiale Erstreckung eines Schaufelprofils wird dabei als Profiltiefe T bezeichnet. Wie dargestellt, wird der Außendurchmesser des Profils als Profildurchmesser DP und der Innendurchmesser des Profils als Profilinnendurchmesser DI bezeichnet. Die Profilhöhe ergibt sich somit aus der Hälfte der Differenz zwischen dem Profildurchmesser und dem Profilinnendurchmesser.

Das Turbinenrad trägt ebenfalls eine Vielzahl von Schaufelprofilen mit entsprechend definierten Abmaßen, allgemein die Turbinenradbeschaufelung 2.1. Das Turbinenrad 2 ist mittels einer Verschraubung drehstarr mit der Kupplungsnabe 5 verbunden. Die Kupplungsnabe 5 ist als Hohlwelle ausgeführt, die sich axial durch das Pumpenrad 1 und die Schale 1.2 erstreckt. Die Kupplungsnabe 5 ist teilweise über die Welle einer Arbeitsmaschine gestülpt, welche als Vollwelle ausgebildet ist und mit der Kupplungsnabe stirnseitig verschraubt ist.

Das Pumpenrad 1 der dargestellten Ausführung der erfindungsgemäßen Kupplung ist mit einem Radiallager 6 auf in Axialrichtung gesehen einem ersten Teil 5.1 der Kupplungsnabe 5 gelagert. Das Lager 6 ist dabei verglichen mit dem entsprechenden Lager der herkömmlichen Kupplung im unteren Teil der dargestellten Zeichnung kleiner ausgeführt. Dadurch kann der Stauraum 4 größer ausgeführt werden, auf dessen Ausmaße später noch näher eingegangen wird.

Die Schale 1.2 ist ebenfalls auf der Kupplungsnabe 5 gelagert, und zwar auf einem zweiten Teil 5.2, welches sich axial an den ersten Teil 5.1 anschließt, jedoch insbesondere, wie dargestellt, einen größeren Durchmesser aufweist. Das hierfür verwendete Lager 7 ist ein Axial-Radial-Lager, das heißt ein sogenanntes Festlager. Dadurch wird erreicht, dass das kleine Lager 6 im Außenrad 1.1 nicht die hydraulische Axialkraft aufnehmen muss, was zu einer Lebensdauererhöhung führt.

Um ausreichend Wärme aus dem Innenraum der Kupplung nach außen abzuführen, kann das Außenrad mit einer oberflächenvergrößernden Verrippung ausgeführt werden. Gleichzeitig kann eine solche Verrippung auf der Schale 1.2 eingespart werden.

Das Pumpenrad 1, das Turbinenrad 2 und die Schale 1.2 können besonders vorteilhaft aus einem Aluminiumwerkstoff hergestellt sein, zum Beispiel aus GAISi 12. Um die mögliche Drehmomentübertragung an der Verbindung zwischen dem Turbinenrad und der Kupplungsnabe zu erhöhen, kann das Turbinenrad beispielsweise aus einem Eisenwerkstoff, zum Beispiel GGG, hergestellt werden. Im Vergleich zur herkömmlichen Kupplung, welche im unteren Teil der Figur 1 dargestelllt ist, wurde das Volumen des Arbeitsraumes um 50 % vergrößert, und das Volumen des Stauraumes wurde ebenfalls um 50 % erhöht. Gleichzeitig wurde der Außendurchmesser DA von 556 mm beibehalten, ebenso wie die axiale Erstreckung Sax von 246 mm.

Die genauen Daten können den folgenden beiden Tabellen entnommen werden.

| | |
|---|---|
| DP | = 500 |
| DI/DP | = 0,485 |
| T/DP | = 0,18 |
| Stauraum/Arbeitsraum | = 3,66/19,4 |
| | = 0,188 |
| Schaufelzahl AR | = 41 |
| Schaufelzahl IR | = 40 |

**Tabelle 1: Daten der erfindungsgemäßen Ausführung in der oberen Hälfte der Figur 1.**

| VTK Größe/ Typ | max. Ölfüllung Liter | Gesamtgewicht | Gewichtsbelastung VTK | | Massenträgheitsmoment (Innenteil) (Außenteil) | |
|---|---|---|---|---|---|---|
| | | kg | m2(kg) | y2(mm) | [kgm*m] | [kgm*m] |
| 500 TXL | 22,6 | ca. 90 | 90 | ca. 130 | 0,679 | 1,699 |

| | |
|---|---|
| DP | = 487 |
| DI/DP | = 0,534 |
| T/DP | = 0,144 |
| Stauraum/Arbeitsraum | = 2,36/12,7 |
| | = 0,186 |
| Schaufelzahl AR | = 46 |
| Schaufelzahl IR | = 46 |

**Tabelle 2: Daten der herkömmlichen Kupplung in der unteren Hälfte der Figur 1.**

| VTK Größe/ Typ | max. Ölfüllung Liter | Gesamt-gewicht | Gewichtsbelastung VTK | | Massenträgheitsmoment (Innenteil) (Außenteil) | |
|---|---|---|---|---|---|---|
| | | kg | m2(kg) | y2(mm) | [kgm*m] | [kgm*m] |
| 487 T | 14,7 | 79 | 79 | 130 | 0,565 | 1,635 |

Durch die beschriebenen Maßnahmen kann eine Leistungssteigerung von ca. 50 % bei gleichem Einbauraum erreicht werden. Dies ist im wesentlichen durch die aufgrund der baulichen Maßnahmen erreichte Nennschlupfverbesserung, das heißt die Verschiebung des Nennschlupfes zu einem niedrigeren Wert, bedingt. Aufgrund des niedrigeren Nennschlupfes kann die erfindungsgemäße Kupplung für eine Leistung zum Übertragen deutlich größerer Anfahrmomente ausgelegt werden.

### Bezugszeichenliste

- 1: Pumpenrad
- 1.1: Antriebsläufer
- 1.2: Schale
- 1.3: Pumpenradbeschaufelung
- 2: Turbinenrad
- 2.1: Turbinenradbeschaufelung
- 3: Arbeitsraum
- 4: Stauraum
- 5: Kupplungsnabe
- 5.1: erster Teil
- 5.2: zweiter Teil
- 6: Radiallager
- 7: Axial-Radial-Lager

## Patentansprüche

1. Hydrodynamische Kupplung mit einer konstanten oder variablen Füllung von Arbeitsmedium
mit einem Pumpenrad (1), umfassend eine Pumpenradbeschaufelung (1.3); und
mit einem Turbinenrad (2), umfassend eine Turbinenradbeschaufelung (2.1);
Pumpenrad (1) und Turbinenrad (2) bilden miteinander einen torusförmigen Arbeitsraum (3) aus, welcher zur Drehmomentübertragung mit dem Arbeitsmedium befüllbar ist;
mit einem Stauraum (4) zur Aufnahme von Arbeitsmedium aus dem Arbeitsraum (3), wobei der Stauraum (4) mit dem Arbeitsraum (3) in einer arbeitsmediumleitenden Verbindung steht;
das Arbeitsmedium kann zur Erhöhung des übertragbaren Drehmoments vom Stauraum (4) in den Arbeitsraum (3) geleitet werden und zur Verminderung des übertragbaren Drehmoments vom Arbeitsraum (3) in den Stauraum (4) geleitet werden,
**dadurch gekennzeichnet, dass**
das Verhältnis des Volumens des Arbeitsraums (3) zum Einbauvolumen der hydrodynamischen Kupplung größer als 0,26 und kleiner als 0,5 ist, wobei das Einbauvolumen der hydrodynamischen Kupplung durch ein Zylindervolumen mit konstantem Durchmesser definiert ist, dessen Außendurchmesser dem maximalen äußeren Durchmesser (DA) der hydrodynamischen Kupplung entspricht, und dessen axiale Länge der maximalen axialen Erstreckung (Sax) der hydrodynamischen Kupplung entspricht; und dass
der Stauraum (4) vollständig radial innerhalb des Arbeitsraums (3) angeordnet ist.

2. Hydrodynamische Kupplung gemäß Anspruch 1, **dadurch gekennzeichnet, dass** das Verhältnis des Volumens des Stauraums (4) zum Volumen des Arbeitsraums (3) größer als 0,185 ist.

3. Hydrodynamische Kupplung nach einem der Ansprüche 1 oder 2, **dadurch gekennzeichnet, dass** das Verhältnis des Profildurchmessers (DP) der Pumpenradbeschaufelung (1.3) und derTurbinenradbeschaufelung (2.1) zum maximalen Außendurchmesser (DA) der Kupplung größer oder gleich 0,89 ist.

4. Hydrodynamische Kupplung gemäß einem der Ansprüche 1 bis 3, **dadurch gekennzeichnet, dass** das Verhältnis des Profilinnendurchmessers (DI) der Pumpenradbeschaufelung (1.3) und der Turbinenradbeschaufelung (2.1) zum Profildurchmesser (DP) kleiner als 0,5 ist, insbesondere kleiner oder gleich 0,485.

5. Hydrodynamische Kupplung gemäß einem der Ansprüche 1 bis 4, **dadurch gekennzeichnet, dass** das Verhältnis von der Profiltiefe (T) der Pumpenradbeschaufelung (1.3) und der Turbinenradbeschaufelung (2.1) zum Profildurchmesser (DP) größer als 0,16, insbesondere größer oder gleich 0,165 ist.

6. Hydrodynamische Kupplung gemäß einem der Ansprüche 1 bis 5, **dadurch gekennzeichnet, dass** das Pumpenrad (1) und das Turbinenrad (2) eine unterschiedliche Schaufelanzahl aufweisen, insbesondere dass das Pumpenrad (1) eine Schaufel mehr als das Turbinenrad (2) aufweist.

7. Hydrodynamische Kupplung gemäß einem der Ansprüche 1 bis 6,
**gekennzeichnet durch** die folgenden Merkmale:
das Pumpenrad (1) ist axial an eine Schale (1.2) angeschlossen,
insbesondere mit dieser verschraubt;
das Pumpenrad (1) und die Schale (1.2) sind derart gegenüberstehend miteinander verbunden, dass ein Hohlraum ausgebildet wird, in welchem das Turbinenrad (2) aufgenommen ist;
das Turbinenrad (2) ist drehstarr auf einer Kupplungsnabe (5) angeordnet,
welche sich radial innerhalb in axialer Richtung **durch** das Pumpenrad (1.1) und die Schale (1.2) erstreckt;
das Pumpenrad (1) ist mittels eines Radiallagers (6) auf der Kupplungsnabe gelagert, und die Schale (1.2) ist mittels eines Axial-RadialLagers (7) auf der Abtriebswelle (5) gelagert.

8. Hydrodynamische Kupplung gemäß Anspruch 7, **dadurch gekennzeichnet, dass** das Pumpenrad (1) und/oder die Schale (1.2) auf seiner/ihrer Außenfläche mit einer oberflächenvergrößernden Verrippung zur besseren Wärmeableitung versehen ist.

9. Hydrodynamische Kupplung gemäß einem der Ansprüche 1 bis 8, **dadurch gekennzeichnet, dass** eine Kupplungsnabe (5) als Hohlwelle ausgebildet ist, welche eine Welle aufnehmen kann.

10. Hydrodynamische Kupplung nach Anspruch 9, **dadurch gekennzeichnet, dass** die Kupplungsnabe (5) eine Welle aufnehmen kann, die einen Durchmesser aufweist der gleich dem 0,21-fachen des Profildurchmesser (DP) ist.

11. Hydrodynamische Kupplung nach Anspruch 9 bis 10, **dadurch gekennzeichnet, dass** die Kupplungsnabe (5) mit der Welle mittels einer Passfederverbindung drehfest verbunden ist.

## Claims

1. A hydrodynamic clutch having constant or variable filling of work medium having a pump wheel (1), comprising pump wheel blading (1.3); and having a turbine wheel (2), comprising turbine wheel blading (2.1); pump wheel (1) and turbine wheel (2) forming a toroidal work space (3) with one another, which is fillable with the work medium for torque transmission;
having a storage space (4) for receiving work medium from the work space (3), the storage space (4) having a connection which conducts work medium to the work space (3);
the work medium being able to be conducted from the storage space (4) into the work space (3) to increase the transmittable torque and being able to be conducted from the work space (3) into the storage space (4) to reduce the transmittable torque;
**characterized in that**
the ratio of the volume of the work space (3) to the installation volume of the hydrodynamic clutch is greater than 0.26 and less than 0.5, the installation volume of the hydrodynamic clutch being defined by a cylinder volume having constant diameter, whose external diameter corresponds to the maximum external diameter (DA) of the hydrodynamic clutch, and whose axial length corresponds to the maximum axial extension (Sax) of the hydrodynamic clutch; and that
the storage space (4) is arranged completely radially within the work space (3).

2. The hydrodynamic clutch according to Claim 1, **characterized in that** the ratio of the volume of the storage space (4) to the volume of the work space (3) is greater than 0.185.

3. The hydrodynamic clutch according to one of Claims 1 or 2, **characterized in that** the ratio of the profile diameter (DP) of the pump wheel blading (1.3) and the turbine wheel blading (2.1) to the maximum external diameter (DA) of the clutch is greater than or equal to 0.89.

4. The hydrodynamic clutch according to one of Claims 1 through 3, **characterized in that** the ratio of the profile internal diameter (DI) of the pump wheel blading (1.3) and the turbine wheel blading (2.1) to the profile diameter (DP) is less than 0.5, in particular less than or equal to 0.485.

5. The hydrodynamic clutch according to one of Claims 1 through 4, **characterized in that** the ratio of the profile depth (T) of the pump wheel blading (1.3) and the turbine wheel blading (2.1) to the profile diameter (DP) is greater than 0.16, in particular greater than or equal to 0.165.

6. The hydrodynamic clutch according to one of Claims 1 through 5, **characterized in that** the pump wheel (1) and the turbine wheel (2) have different blade counts, in particular, the pump wheel (1) has one more blade than the turbine wheel (2).

7. The hydrodynamic clutch according to one of Claims 1 through 6, **characterized by** the following features
the pump wheel (1) is axially attached to a shell (1.2), in particular screwed thereon;
the pump wheel (1) and the shell (1.2) are connected to one another diametrically opposite so that a cavity is formed, in which the turbine wheel (2) is received;
the turbine wheel (2) is situated rotationally fixed on a clutch hub (5), which extends radially inside in the axial direction through the pump wheel (1.1) and the shell (1.2);
the pump wheel (1) is mounted on the clutch hub using a radial bearing (6), and the shell (1.2) is mounted on the output shaft (5) using an axial-radial bearing (7).

8. The hydrodynamic clutch according to Claim 7, **characterized in that** the pump wheel (1) and/or the shell (1.2) is/are provided on the external surface thereof with ribbing which enlarges the surface area for better heat dissipation.

9. The hydrodynamic clutch according to one of Claims 1 through 8, **characterized in that** the clutch hub (5) is designed as a hollow shaft, which can receive a shaft.

10. The hydrodynamic cluth according to Claim 9, **characterized in that** the clutch hub (5) can receive a shaft, which has a diameter equal to 0.21 times the profile diameter (DP).

11. The hydrodynamic clutch according to one of Claims 1 through 9, **characterized in that** the clutch hub (5) is connected rotationally fixed to the shaft using a feather key connection.

## Revendications

1. Accouplement hydrodynamique avec remplissage constant ou variable de fluide de travail
avec une roue de pompe (1), comprenant un aubage de roue de pompe (1.3); et
avec une roue de turbine (2), comprenant un aubage de roue de turbine (2.1);
roue de pompe (1) et roue de turbine (2) forment ensemble une chambre de travail toroïdale (3), pouvant être remplie du fluide de travail pour transmission du couple de rotation;
comportant un espace de stockage (4) destiné à recevoir le fluide de travail à partir de la chambre de travail (3), où l'espace de stockage (4) est en liaison de guidage de fluide de travail avec la chambre de travail (3);
le fluide de travail peut être guidé de l'espace de stockage (4) vers la chambre de travail (3) pour augmenter le couple de rotation transmissible et guidé de la chambre de travail (3) vers l'espace de stockage (4) pour réduire le couple de rotation transmissible,
**caractérisé en ce que**
le rapport du volume de la chambre de travail (3) au volume de montage de l'accouplement hydrodynamique est supérieur à 0,26 et inférieur à 0,5, dans lequel le volume de montage de l'accouplement hydrodynamique est défini par un volume cylindrique de diamètre constant, dont le diamètre externe correspond au diamètre externe maximal (DA) de l'accouplement hydrodynamique, et dont la longueur axiale correspond à l'allongement axial maximal (Sax) de l'accouplement hydrodynamique; et que l'espace de stockage (4) est disposé complètement radialement à l'intérieur de la chambre de travail (3).

2. Accouplement hydrodynamique selon la revendication 1, **caractérisé en ce que** le rapport du volume de l'espace de stockage (4) au volume de la chambre de travail (3) est supérieur à 0,185.

3. Accouplement hydrodynamique selon l'une des revendications 1 ou 2, **caractérisé en ce que** le rapport du diamètre de profil (DP) de l'aubage de roue de pompe (1.3) et de l'aubage de roue de turbine (2.1) au diamètre externe maximal (DA) de l'accouplement est supérieur ou égal à 0,89.

4. Accouplement hydrodynamique conformément à l'une des revendications 1 à 3, **caractérisé en ce que** le rapport du diamètre interne de profil (D1) de l'aubage de roue de pompe (1.3) et de l'aubage de roue de turbine (2.1) au diamètre de profil (DP) est inférieur à 0,5, en particulier inférieur ou égal à 0,485.

5. Accouplement hydrodynamique conformément à l'une des revendications 1 à 4, **caractérisé en ce que** le rapport de la profondeur de profil (T) de l'aubage de roue de pompe (1.3) et de l'aubage de roue de turbine (2.1) au diamètre de profil (DP) est supérieur à 0,16, en particulier supérieur ou égal à 0,165.

6. Accouplement hydrodynamique conformément à l'une des revendications 1 à 5, **caractérisé en ce que** la roue de pompe (1) et la roue de turbine (2) présentent un nombre d'aubes différent, en particulier que la roue de pompe (1) comporte une aube de plus que la roue de turbine (2).

7. Accouplement hydrodynamique conformément à l'une des revendications 1 à 6, présentant les caractéristiques suivantes:
la roue de pompe (1) est connectée axialement à une coque (1.2), en particulier vissée à ladite coque;
la roue de pompe (1) et la coque (1.2) sont reliées en regard l'une de l'autre de telle sorte qu'une cavité est formée, dans laquelle la roue de turbine (2) est logée;
la roue de turbine (2) est disposée fixe en rotation sur un moyeu d'accouplement (5),
qui s'étend radialement à l'intérieur axialement à travers la roue de pompe (1.1) et la coque (1.2);
la roue de pompe (1) est montée sur le moyeu d'accouplement à l'aide d'un palier radial (6) et la coque (1.2) est montée à l'aide d'un palier axial radial (7) sur l'arbre de sortie (5).

8. Accouplement hydrodynamique selon la revendication 7, **caractérisé en ce que** la roue de pompe (1) et/ou la coque (1.2) est munie, sur une surface externe, d'un nervurage agrandissant la surface pour assurer une meilleure conduction thermique.

9. Accouplement hydrodynamique conformément à l'une des revendications 1 à 8, **caractérisé en ce qu'**un moyeu d'accouplement (5) est conçu comme arbre creux susceptible de recevoir un arbre.

10. Accouplement hydrodynamique selon la revendication 9, **caractérisé en ce que** le moyeu d'accouplement (5) peut recevoir un arbre présentant un diamètre égal à 0,21 le diamètre de profil (DP).

11. Accouplement hydrodynamique selon la revendication 9 à 10, **caractérisé en ce que** le moyeu d'accouplement (5) est connecté de manière solidaire en rotation avec l'arbre au moyen d'un raccord à clavette.
